# FASCICULE DE BREVET EUROPEEN

(11) **EP 3 487 736 B1**
(45) Date de publication et mention de la délivrance du brevet: **09.03.2022**
(21) Numéro de dépôt: 17742828.1
(22) Date de dépôt: 07.07.2017
(51) Int. Cl.: B60W 30/09, B60W 30/095, B60W 30/18

(54) **DISPOSITIF DE SÉCURISATION D'UN VÉHICULE À L'ARRÊT EN PRÉSENCE D'UN RISQUE DE COLLISION PAR L'ARRIÈRE**
VORRICHTUNG ZUM SICHERN EINES STEHENDEN FAHRZEUGS BEI VORLIEGEN EINER KOLLISIONSGEFAHR VON HINTEN
DEVICE FOR MAKING SAFE A STATIONARY VEHICLE IN THE PRESENCE OF A RISK OF COLLISION FROM THE REAR

(30) Priorité: 21.07.2016 FR 1656988
(43) Date de publication de la demande: 29.05.2019
(73) Titulaire: PSA Automobiles SA, 78300 Poissy (FR)
(72) Inventeur: CHIKH, Youssef, 92800 Puteaux (FR)
(86) Numéro de dépôt international: PCT/FR2017/051858
(87) Numéro de publication internationale: WO 2018/015635

(56) Documents cités:
- DE-A1- 10 244 205
- DE-A1-102005 062 275
- DE-A1-102009 013 564
- DE-A1-102010 001 304
- US-A1- 2004 090 117

## Description

L'invention concerne les dispositifs de sécurisation qui équipent certains véhicules, éventuellement automobiles, et qui sont destinés à éviter autant que possible des collisions avec d'autres véhicules.

Comme le sait l'homme de l'art, certains véhicules, généralement de type automobile, comprennent des dispositifs de sécurisation (ou d'aide à la conduite) qui sont destinés à agir sur eux, et éventuellement à alerter leurs conducteurs, lorsqu'ils se déplacent et qu'il existe un risque de collision avec un obstacle mobile tel qu'un véhicule, un piéton ou un animal.

Ces dispositifs de sécurisation utilisent des analyses de l'environnement (extérieur) de leur véhicule, effectuées par des moyens d'analyse embarqués, pour déterminer une ou plusieurs actions à déclencher en cas de risque de collision. Ces moyens d'analyse de l'environnement peuvent, par exemple, comprendre des capteurs à ultrasons et/ou au moins une caméra et/ou au moins un laser de balayage et/ou au moins un radar ou lidar.

Parmi les actions connues pouvant être décidées par un dispositif de sécurisation en présence de risque de collision avec un véhicule suivant son propre véhicule, on peut notamment citer un changement de la trajectoire en cours de son véhicule ou une augmentation de la distance séparant son véhicule du véhicule qui le suit (via une brève augmentation de la vitesse en cours).

Lorsque le véhicule est à l'arrêt son dispositif de sécurisation peut déclencher plusieurs actions. Ainsi, il peut déclencher la fermeture des vitres ouvertes et de l'éventuel toit ouvrant, le pré-tensionnement des ceintures de sécurité, le déplacement vers l'avant des sièges mobiles et/ou le renforcement de la pression des freins pour que son véhicule ne se déplace pas lors du choc et/ou un déplacement sécuritaire des appuis-tête afin d'éviter un coup du lapin. Toutes ces actions ne font que réduire certaines conséquences en cas de collision du véhicule par l'arrière, mais elles ne permettent pas d'éviter que la collision se produise.

On connait notamment des documents DE102010001304A, DE102005062275A, DE10244205A et US2004090117A, des dispositifs de sécurisation permettant d'éviter des collisions et/ou de réduire les effets de telles collision. Toutefois, aucun de ces documents ne prévoit de mettre le véhicule sur une zone de sécurité située latéralement par rapport au véhicule.

L'invention a notamment pour but d'améliorer la situation.

Elle propose notamment à cet effet un dispositif de sécurisation conforme à la partie caractérisante de la revendication 1.

Ainsi, dans le meilleur des cas la collision est évitée, et dans le pire des cas la collision se fait sur un côté du premier véhicule ce qui limite notablement les conséquences tant sur ce dernier que sur ses passagers.

Le dispositif de sécurisation selon l'invention peut comporter d'autres caractéristiques qui peuvent être prises séparément ou en combinaison, et notamment :
- ses moyens de contrôle peuvent être agencés, en cas de détermination de deux zones vides à droite et à gauche d'une partie arrière du premier véhicule, pour déterminer pour ce dernier une trajectoire curviligne vers l'arrière dans la zone vide déterminée qui est située sur un côté latéral voisin d'un conducteur du premier véhicule.
- ses moyens de contrôle peuvent être agencés, en cas de détection du risque de collision, pour déclencher une alerte de passager(s) du premier véhicule ;
- ses moyens de contrôle peuvent être agencés, en cas de détection du risque de collision, pour déclencher un fonctionnement de feux de signalisation et/ou d'un avertisseur sonore du premier véhicule, de manière à informer son environnement du déplacement de ce dernier ;
   ➢ les feux de signalisation peuvent être choisis parmi (au moins) des feux de stop et des feux de détresse ;

L'invention propose également un véhicule de type automobile et comprenant des moyens d'analyse propres à analyser son environnement, et un dispositif de sécurisation du type de celui présenté ci-avant.

D'autres caractéristiques et avantages de l'invention apparaîtront à l'examen de la description détaillée ci-après, et des dessins annexés, sur lesquels :

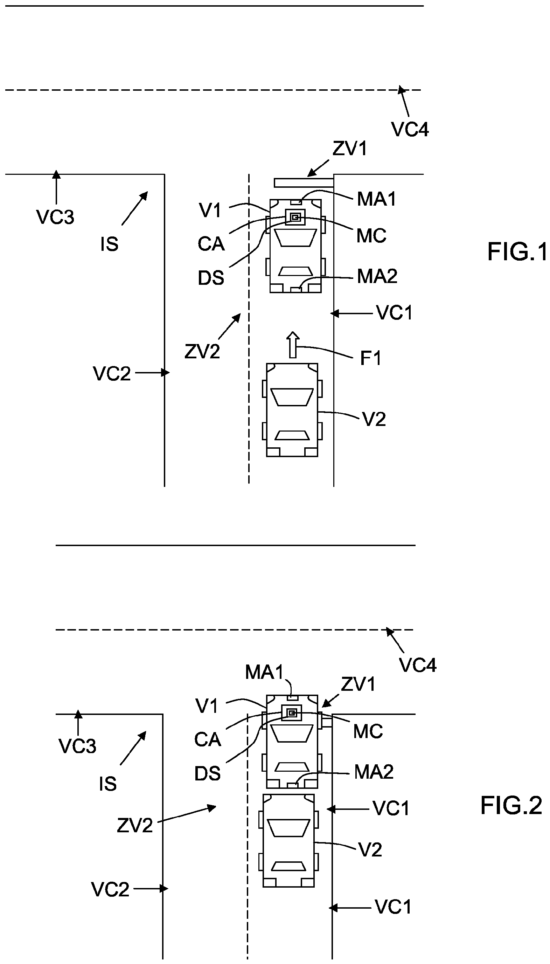

- la figure 1 illustre schématiquement et fonctionnellement, dans une vue du dessus, un exemple d'intersection au niveau de laquelle est arrêté à un stop un premier véhicule équipé d'un dispositif de sécurisation selon l'invention et derrière lequel arrive un second véhicule à une vitesse trop importante pour s'arrêter sans le percuter,
- la figure 2 illustre schématiquement et fonctionnellement, dans une vue du dessus, l'intersection de la figure 1 après un déplacement vers l'avant du premier véhicule, décidé par son dispositif de sécurisation et ayant permis au second véhicule de s'arrêter sans le percuter,

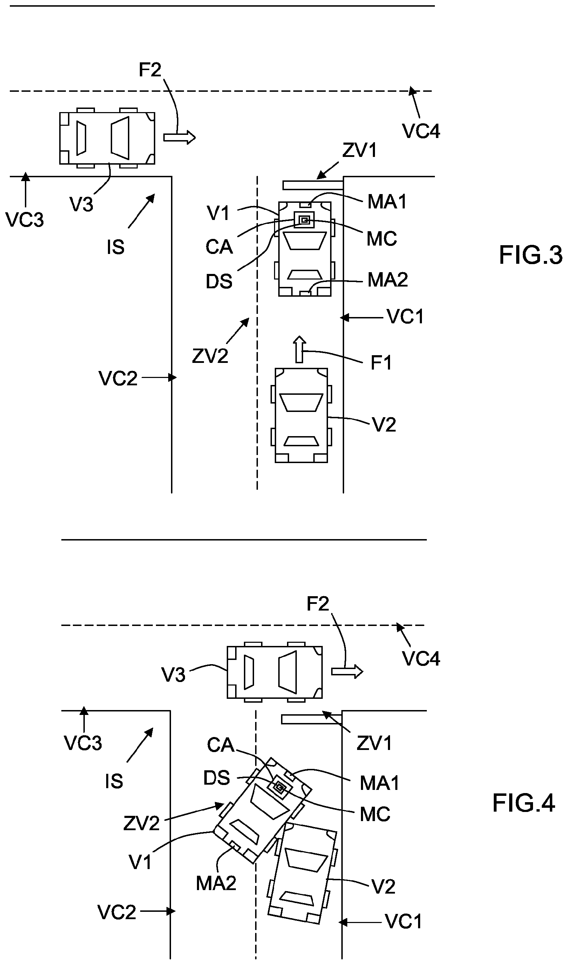

- la figure 3 illustre schématiquement et fonctionnellement, dans une vue du dessus, un exemple d'intersection au niveau de laquelle est arrêté à un stop un premier véhicule équipé d'un dispositif de sécurisation selon l'invention, derrière lequel arrive un deuxième véhicule à une vitesse trop importante pour s'arrêter sans le percuter, et à la gauche duquel arrive un troisième véhicule ayant la priorité, et
- la figure 4 illustre schématiquement et fonctionnellement, dans une vue du dessus, l'intersection de la figure 1 après un déplacement vers l'arrière et la gauche du premier véhicule, décidé par son dispositif de sécurisation et lui ayant permis de se positionner en biais afin que le deuxième véhicule le percute sur son côté droit selon un petit angle aigu.

L'invention a notamment pour but de proposer un dispositif de sécurisation DS destiné à équiper un (premier) véhicule V1 afin d'au moins limiter les conséquences d'une collision par l'arrière lorsqu'il est à l'arrêt en ayant son contact ouvert.

On entend ici par « contact ouvert » le fait que le contact du véhicule ait été mis pour que son groupe motopropulseur (ou GMP) et son circuit d'alimentation électrique soient au minimum activés. En présence d'un GMP à moteur thermique et dépourvu de système de contrôle des arrêts temporaires de ce dernier (ou « stop and start » (ou STT)), cela signifie que ce moteur thermique est démarré et tourne au ralenti, et en présence d'un GMP à moteur thermique et à système STT, cela signifie que ce moteur thermique est temporairement arrêté mais peut être automatiquement redémarré à tout moment. Cette ouverture peut, par exemple, se faire en entraînant en rotation la clé de contact ou en appuyant sur un bouton de démarrage ou encore en introduisant une clé électronique dans un logement de démarrage dédié.

Le redémarrage du moteur thermique dans la configuration STT se produit, par exemple, en appuyant sur la pédale d'embrayage ou en relâchant la pédale de frein. Dans ces cas précis, l'ordre de redémarrage du moteur thermique sera donné dès que l'imminence d'un choc aura été détectée, comme on le verra plus loin.

Par ailleurs, on entend ici par « à l'arrêt » le fait que le premier véhicule V1 soit immobile ou quasi immobile du fait, par exemple, qu'il est à une intersection où il doit céder le passage de façon réglementaire ou équipée d'un panneau de stop ou de cession de passage ou d'un feu de circulation, ou bien dans un parking ou une rue ou encore une route.

Dans ce qui suit, on considère, à titre d'exemple non limitatif, que le premier véhicule V1 est de type automobile. Il s'agit par exemple d'une voiture. Mais l'invention n'est pas limitée à ce type de véhicule à moteur. Elle concerne en effet tout type de véhicule terrestre ou maritime (ou fluvial), et notamment les camions, les cars (ou bus), les véhicules utilitaires, les engins de chantiers et les machines agricoles pouvant circuler sur les voies de circulation, les motocyclettes, les bateaux à moteur, les trains et les tramways.

On a schématiquement représenté sur les figures 1 à 4 une intersection IS entre des première et seconde routes, la première débouchant dans la seconde au niveau d'un stop. Ici, la première route comporte des première VC1 et deuxième VC2 voies à sens de circulation opposés, et la seconde route comporte des troisième VC3 et quatrième VC4 voies à sens de circulation opposés.

Dans le premier exemple illustré non limitativement sur la figure 1, le premier véhicule V1 est à l'arrêt au stop sur la première voie de circulation VC1 (à l'intersection IS entre les première et seconde routes), et un deuxième véhicule V2 circule sur la première voie de circulation VC1 (suivant la flèche F1) derrière le premier véhicule V1.

Dans le second exemple illustré non limitativement sur la figure 3, le premier véhicule V1 est à l'arrêt au stop sur la première voie de circulation VC1 (à l'intersection IS entre les première et seconde routes), un deuxième véhicule V2 circule sur la première voie de circulation VC1 (suivant la flèche F1) derrière le premier véhicule V1, et un troisième véhicule V3 circule sur la troisième voie de circulation VC3 (suivant la flèche F2) juste avant l'intersection IS, en étant prioritaire.

Comme illustré sur les figures 1 à 4, le premier véhicule V1 est équipé d'un dispositif de sécurisation DS selon l'invention et de moyens d'analyse MAj (ici j = 1 ou 2) propres à analyser son environnement. On entend ici par « environnement » l'espace extérieur qui entoure le premier véhicule V1 devant sa partie avant, derrière sa partie arrière et sur ses deux côtés latéraux (droite et gauche).

Ces moyens d'analyse (de l'environnement) MAj peuvent, par exemple, comprendre des capteurs à ultrasons et/ou au moins une caméra et/ou au moins un laser de balayage et/ou au moins un radar ou lidar. Ainsi, les moyens d'analyse MA1 situés à l'avant peuvent, par exemple, comprendre des capteurs à ultrasons (ou un laser de balayage ou un radar ou lidar) et une caméra, et les moyens d'analyse MA2 situés à l'arrière peuvent, par exemple, comprendre des capteurs à ultrasons (ou un laser de balayage ou un radar ou lidar).

Par exemple, les moyens d'analyse MAj fournissent à un calculateur CA embarqué les résultats de leurs analyses, à savoir des informations sur l'environnement, et notamment la présence d'un obstacle fixe ou mobile (véhicule, piéton ou animal), la distance séparant le premier véhicule V1 de cet obstacle et la vitesse relative de cet obstacle par rapport au premier véhicule V1.

Le dispositif de sécurisation DS, selon l'invention, utilisant ces informations sur l'environnement, il peut, comme illustré non limitativement sur les figures 1 à 4, faire partie du calculateur CA. Mais cela n'est pas obligatoire. Ce dispositif de sécurisation DS pourrait en effet être un équipement couplé au calculateur CA, directement ou indirectement. Il pourrait notamment faire partie d'un autre calculateur ou appareil. Par conséquent, le dispositif de sécurisation DS peut être réalisé sous la forme de modules logiciels (ou informatiques ou encore « software »), ou bien d'une combinaison de circuits électroniques (ou « hardware ») et de modules logiciels.

Un dispositif de sécurisation DS, selon l'invention, comprend des moyens de contrôle MC chargés d'agir lorsque le premier véhicule V1 est à l'arrêt en ayant son contact ouvert et en présence d'un risque de collision du premier véhicule V1 par un second véhicule V2 circulant derrière lui (comme dans les deux exemples illustrés sur les figures 1 et 3). Chaque fois que ces trois conditions sont réunies, les moyens de contrôle MC sont agencés pour déterminer s'il existe dans l'environnement analysé par les moyens d'analyse MAj au moins une zone vide ZVk qui est accessible, à l'instant présent, par le premier véhicule V1.

Dans l'affirmative (c'est-à-dire s'il existe au moins une zone vide ZVk accessible autour du premier véhicule V1), les moyens de contrôle MC sont agencés pour déterminer pour ce dernier (V1) une trajectoire dans cette zone vide ZVk (ou dans l'une des zones vides ZVk) propre au moins à limiter les conséquences de la collision par l'arrière dont le risque a été détecté. Puis,
les moyens de contrôle MC sont agencés pour déclencher un déplacement du premier véhicule V1 selon cette trajectoire déterminée.

On comprendra que pour permettre au premier véhicule V1 de se déplacer selon la trajectoire déterminée, il faut au moins que son GMP, son système de freinage, et sa direction à assistance électrique puissent être contrôlés automatiquement. Cela est notamment possible au moyen d'équipements faisant partie des véhicules disposant d'un système avancé d'aide à la conduite (par exemple de type ADAS (« Advanced Driver Assistance System »)).

Grâce à ce déplacement la collision par l'arrière du premier véhicule V1 par le second véhicule V2 est évitée. Dans le meilleur des cas, le second véhicule V2 ne percute pas du tout le premier véhicule V1 ce qui permet de sauvegarder totalement l'intégrité du premier véhicule V1 et de ses passagers, comme on le verra plus loin en référence à la figure 2. Dans le pire des cas, le second véhicule V2 percute le premier véhicule V1 sur l'un de ses côtés latéraux (droit et gauche), ce qui limite notablement les conséquences sur le premier véhicule V1 et sur ses passagers, comme on le verra plus loin en référence à la figure 4.

On notera qu'il est avantageux que les moyens de contrôle MC soient également agencés, en cas de détection du risque de collision, pour déclencher une alerte de passager(s) du premier véhicule V1. Cette alerte peut, par exemple, se faire au moyen d'un message sonore diffusé par au moins un haut-parleur du premier véhicule V1.

On notera qu'il est également avantageux que les moyens de contrôle MC soient également agencés, en cas de détection du risque de collision, pour déclencher un fonctionnement des feux de signalisation du premier véhicule V1 et/ou d'un avertisseur sonore du premier véhicule V1, afin d'informer l'environnement extérieur du déplacement de ce dernier (V1).

Par exemple, les feux de signalisation que l'on fait fonctionner peuvent être des feux de stop ou des feux de détresse (ou « warning »). Dans le cas de feux de stop, on peut les faire fonctionner de façon alternative afin de mieux attirer l'attention.

Comme évoqué deux situations peuvent survenir lorsqu'il existe au moins une zone vide ZVk accessible autour du premier véhicule V1.

Une première situation est illustrée sur les figures 1 et 2. Ici, les moyens de contrôle MC ont déterminé une première zone vide ZV1 (k = 1) devant le premier véhicule V1, et une seconde zone vide ZV2 (k = 2) à l'arrière gauche du côté latéral gauche du premier véhicule V1, grâce aux analyses de l'environnement effectuées par les moyens d'analyse MAj. La première zone vide ZV1 est ici particulièrement avantageuse car, en l'absence de véhicule circulant de façon prioritaire sur la troisième voie de circulation VC3, elle peut permettre de loger une partie au moins du premier véhicule V1.

Par conséquent, en cas de détermination d'une zone vide ZVk (ici ZV1) devant le premier véhicule V1, les moyens de contrôle MC peuvent être agencés pour déterminer pour ce dernier (V1) une trajectoire linéaire vers l'avant dans cette zone vide ZVk déterminée. On comprendra que cette trajectoire linéaire vers l'avant permet d'augmenter la distance séparant les premier V1 et second V2 véhicules, et donc offre au second véhicule V2 une distance de freinage plus importante pour s'arrêter avant le premier véhicule V1. Dans l'exemple illustré sur la figure 2, le déplacement du premier véhicule V1 vers l'avant, sur une distance d'environ deux mètres, a permis au second véhicule V2 de s'arrêter avant de le percuter.

On notera qu'il est préférable que les moyens de contrôle MC soient agencés pour déterminer une trajectoire linéaire vers l'avant d'une longueur minimale (c'est-à-dire la plus courte possible), afin d'éviter une collision à l'avant du premier véhicule V1. Une telle collision à l'avant pourrait survenir si un troisième véhicule V3 circulait sur la troisième voie de circulation VC3 à gauche de l'intersection IS. Cette longueur minimale dépend notamment de la distance de freinage nécessaire au second véhicule V2 pour s'arrêter compte tenu de sa vitesse, et de l'environnement devant le premier véhicule V1. Un radar, lidar ou laser de balayage peut scruter en temps réel la vitesse et la trajectoire du deuxième véhicule V2 ainsi que des autres véhicules pouvant potentiellement se trouver sur les autres voies de circulation voisines, afin ainsi permettre la détermination du déplacement adapté du premier véhicule V1. On comprendra en effet qu'en présence d'un troisième véhicule V3 arrivant par la gauche sur la troisième voie de circulation VC3 on est contraint de réduire la longueur sur laquelle le premier véhicule V1 peut s'avancer pour éviter qu'il soit percuté par l'avant.

Une seconde situation est illustrée sur les figures 3 et 4. Ici, les moyens de contrôle MC ont également déterminé une première zone vide ZV1 (k = 1) devant le premier véhicule V1, et une seconde zone vide ZV2 (k = 2) à l'arrière gauche du côté latéral gauche du premier véhicule V1, grâce aux analyses de l'environnement effectuées par les moyens d'analyse MAj. Mais ils ont également détecté l'arrivée à l'intersection IS par la gauche d'un troisième véhicule V3 circulant sur la troisième voie de circulation VC3 et donc prioritaire. Par conséquent, les moyens de contrôle MC ne peuvent pas utiliser cette première zone vide ZV1 qui sera très prochainement occupée par le troisième véhicule V3, et donc ne peuvent utiliser que la seconde zone vide ZV2.

Il en résulte, qu'en cas d'absence de zone vide ZV1 devant le premier véhicule V1 mais de détermination d'une zone vide ZV2 sur une partie latérale arrière du premier véhicule V1 (ici à gauche), les moyens de contrôle MC peuvent être agencés pour déterminer pour ce dernier (V1) une trajectoire curviligne vers l'arrière dans cette zone vide ZV2 déterminée, afin que le second véhicule V2 entre en collision en biais avec un côté latéral du premier véhicule V1, comme illustré sur la figure 4. On comprendra que pour permettre au premier véhicule V1 de manœuvrer pour suivre cette trajectoire curviligne, il faut que la direction des roues directrices puisse être contrôlée automatiquement.

Plus l'angle d'incidence du deuxième véhicule V2 par rapport au côté latéral (ici droit) du premier véhicule V1 sera petit, plus le deuxième véhicule V2 pourra « glisser » contre le premier véhicule V1 et donc moins les conséquences de la collision seront importantes. En outre, et comme illustré sur la figure 4, le fait que le premier véhicule V1 recule en s'écartant vers la gauche, libère un peu de place sur sa droite et donc permet également au deuxième véhicule V2 de manœuvrer légèrement vers la droite, ce qui peut éventuellement suffire à le laisser passer à droite du premier véhicule V1 sans le percuter.

On notera qu'en cas de détermination de deux zones vides ZVk à droite et à gauche de la partie arrière du premier véhicule V1, il est préférable que les moyens de contrôle MC soient agencés pour déterminer pour le premier véhicule V1 une trajectoire curviligne vers l'arrière dans la zone vide ZVk déterminée qui est située sur un côté latéral voisin de son conducteur. Cette option est destinée à permettre l'amortissement du choc par le côté qui est opposé à celui où le conducteur du premier véhicule V1 est assis, pour éviter que ce conducteur soit blessé, et ainsi qu'il puisse manœuvrer le premier véhicule V1 après la collision latérale si cela s'avère encore possible.

Lorsqu'il n'existe pas de zone vide ZVk accessible autour du premier véhicule V1 (et donc dans la négative), les moyens de contrôle MC peuvent, par exemple, être agencés pour déclencher une alerte des passagers du premier véhicule V1 (par exemple au moyen d'un message sonore diffusé par au moins un haut-parleur), le pré-tensionnement des ceintures de sécurité, et un fonctionnement des feux de signalisation et/ou de l'avertisseur sonore afin d'informer l'environnement extérieur, ainsi qu'éventuellement la fermeture des vitres ouvertes et de l'éventuel toit ouvrant et/ou le déplacement vers l'avant des sièges mobiles et/ou le renforcement de la pression des freins et/ou un déplacement sécuritaire des appuis-tête.

On notera que la détection du risque de collision peut être réalisée soit par le dispositif de sécurisation DS en fonction des informations d'environnement fournies par les moyens d'analyse MAj, soit par un autre dispositif embarqué dans le premier véhicule V1, comme par exemple un dispositif de supervision de l'ensemble des informations de « perception de l'environnement » du premier véhicule V1.

On notera également que les moyens d'analyse MAj peuvent éventuellement faire partie du dispositif de sécurisation DS.

On décrit ci-après un exemple non limitatif d'algorithme (ou procédé) permettant de sécuriser le premier véhicule V1.

L'algorithme commence lorsque le premier véhicule V1 est à l'arrêt en ayant son contact ouvert et qu'un risque de collision par l'arrière du premier véhicule V1 par un second véhicule V2 a été détecté. Si le premier véhicule V1 dispose d'un système de type STT, on (MC) fait redémarrer le moteur thermique, puis on (MC) détermine s'il existe au moins une zone vide ZVk accessible dans l'environnement du premier véhicule V1.

Dans l'affirmative, on (MC) détermine une trajectoire dans cette zone vide ZVk. Puis, on (MC) déclenche le déplacement du premier véhicule V1 selon cette trajectoire déterminée, éventuellement en alertant simultanément (ou préalablement) les passagers (de préférence de façon sonore), et éventuellement en déclenchant le fonctionnement des feux de signalisation et/ou de l'avertisseur sonore. En cas de trajectoire curviligne vers l'arrière, on (MC) peut également conditionner le premier véhicule V1 à une collision, par exemple en déclenchant le pré-tensionnement des ceintures de sécurité, et un fonctionnement des feux de signalisation et/ou de l'avertisseur sonore, ainsi qu'éventuellement la fermeture des vitres ouvertes et de l'éventuel toit ouvrant et/ou le déplacement vers l'avant des sièges mobiles et/ou le renforcement de la pression des freins et/ou un déplacement sécuritaire des appuis-tête.

Dans la négative, on (MC) alerte les passagers du premier véhicule V1 (de préférence de façon sonore), et conditionne le premier véhicule V1 à une collision par exemple en déclenchant le pré-tensionnement des ceintures de sécurité, et un fonctionnement des feux de signalisation et/ou de l'avertisseur sonore, ainsi qu'éventuellement la fermeture des vitres ouvertes et de l'éventuel toit ouvrant et/ou le déplacement vers l'avant des sièges mobiles et/ou le renforcement de la pression des freins et/ou un déplacement sécuritaire des appuis-tête.

## Revendications

1. Dispositif de sécurisation (DS) pour un premier véhicule (V1) comprenant des moyens d'analyse (MAj) propres à analyser son environnement, dans lequel des moyens de contrôle (MC) sont agencés, lorsque ledit premier véhicule (V1) est à l'arrêt en ayant son contact ouvert et en présence d'un risque de collision dudit premier véhicule (V1) par un second véhicule (V2) circulant sur la même voie (VC1) derrière lui, pour déterminer s'il existe dans ledit environnement analysé au moins une zone vide (ZVk) accessible par ledit premier véhicule (V1), et, dans l'affirmative, pour déterminer pour ce dernier (V1) une trajectoire dans cette zone vide (ZVk) propre au moins à limiter les conséquences de cette collision, puis pour déclencher un déplacement dudit premier véhicule (V1) selon cette trajectoire déterminée toute en tenant compte de la présence d'un troisième véhicule (V3) circulant sur une autre voie (VC3), dans l'environnement du premier véhicule, **caractérisé en ce que** lesdits moyens de contrôle (MC) sont agencés, en cas d'absence de zone vide (ZVk) devant ledit premier véhicule (V1) mais de détermination d'une zone vide (ZVk) sur une partie latérale arrière dudit premier véhicule (V1), pour déterminer pour ce dernier (V1) une trajectoire curviligne vers l'arrière dans cette zone vide (ZVk) déterminée, de sorte que ledit second véhicule entre en collision en biais avec un côté latéral dudit premier véhicule (V1).

2. Dispositif selon la revendication précédente, **caractérisé en ce que** lesdits moyens de contrôle (MC) sont agencés, en cas de détermination de deux zones vides (ZVk) à droite et à gauche d'une partie arrière dudit premier véhicule (V1), pour déterminer pour ce dernier (V1) une trajectoire curviligne vers l'arrière dans la zone vide (ZVk) déterminée qui est située sur un côté latéral voisin d'un conducteur dudit premier véhicule (V1).

3. Dispositif selon l'une des revendications précédentes, **caractérisé en ce que** lesdits moyens de contrôle (MC) sont agencés, en cas de détection dudit risque de collision, pour déclencher une alerte de passager(s) dudit premier véhicule (V1).

4. Dispositif selon l'une des revendications précédentes, **caractérisé en ce que** lesdits moyens de contrôle (MC) sont agencés, en cas de détection dudit risque de collision, pour déclencher un fonctionnement de feux de signalisation et/ou d'un avertisseur sonore dudit premier véhicule (V1), de manière à informer ledit environnement du déplacement de ce dernier (V1).

5. Dispositif selon la revendication 4, **caractérisé en ce que** lesdits feux de signalisation sont choisis dans un groupe comprenant des feux de stop et des feux de détresse.

6. Véhicule comprenant des moyens d'analyse (MAj) propres à analyser son environnement, **caractérisé en ce qu'**il comprend en outre un dispositif de sécurisation (DS) selon l'une des revendications précédentes.

7. Véhicule selon la revendication 6, **caractérisé en ce qu'**il est de type automobile.

## Patentansprüche

1. Sicherungsvorrichtung (DS) für ein erstes Fahrzeug (V1) mit Analysemitteln (MAj), die geeignet sind, seine Umgebung zu analysieren, in der Steuermittel (MC) angeordnet sind, wenn das erste Fahrzeug (V1) steht, wobei sein Kontakt offen ist und ein Risiko einer Kollision des ersten Fahrzeugs (V1) durch ein zweites Fahrzeug (V2) besteht, das auf der gleichen Spur (VC1) hinter ihm fährt, um zu bestimmen, ob es in der analysierten Umgebung mindestens eine leere Zone (ZVk) gibt, die für das erste Fahrzeug (V1) zugänglich ist, und, wenn ja, um für dieses letztere (V1) eine Bahn in dieser leeren Zone (ZVk) zu bestimmen, die geeignet ist, zumindest die Folgen dieser Kollision zu begrenzen, um dann eine Fahrt des ersten Fahrzeugs (V1) gemäß dieser bestimmten Bahn auszulösen, wobei die Anwesenheit eines dritten Fahrzeugs (V3), das auf einer anderen Spur (VC3) fährt, in der Umgebung des ersten Fahrzeugs berücksichtigt wird, **dadurch gekennzeichnet, dass** die Kontrollmittel (MC) angeordnet sind, im Falle des Fehlens einer leeren Zone (ZVk) vor dem ersten Fahrzeug (V1), aber der Bestimmung einer leeren Zone (ZVk) auf einem hinteren Seitenteil des ersten Fahrzeugs (V1), für dieses letztere (V1) eine krummlinige Bahn nach hinten in dieser bestimmten leeren Zone (ZVk) zu bestimmen, so dass das zweite Fahrzeug schräg mit einer Seitenwand des ersten Fahrzeugs (V1) kollidiert.

2. Vorrichtung nach dem vorhergehenden Anspruch, **dadurch gekennzeichnet, dass** die Steuermittel (MC) im Falle der Bestimmung von zwei leeren Zonen (ZVk) rechts und links von einem hinteren Teil des ersten Fahrzeugs (V1) dazu eingerichtet sind, für dieses (V1) eine krummlinige Trajektorie nach hinten in der bestimmten leeren Zone (ZVk) zu bestimmen, die sich auf einer Seitenfläche befindet, die einem Fahrer des ersten Fahrzeugs (V1) benachbart ist.

3. Vorrichtung nach einem der vorhergehenden Ansprüche, **dadurch gekennzeichnet, dass** die Steuermittel (MC) bei Erkennung des Kollisionsrisikos dazu eingerichtet sind, einen Warnhinweis für den/die Insassen des ersten Fahrzeugs (V1) auszulösen.

4. Vorrichtung nach einem der vorhergehenden Ansprüche, **dadurch gekennzeichnet, dass** die Steuermittel (MC) bei Erkennung der Kollisionsgefahr so angeordnet sind, dass sie einen Betrieb von Signalleuchten und/oder einer Hupe des ersten Fahrzeugs (V1) auslösen, um die Umgebung über die Bewegung des ersten Fahrzeugs (V1) zu informieren.

5. Vorrichtung nach Anspruch 4, **dadurch gekennzeichnet, dass** die Signallichter aus einer Gruppe ausgewählt sind, die Bremslichter und Warnlichter umfasst.

6. Fahrzeug mit Analysemitteln (MAj), die geeignet sind, seine Umgebung zu analysieren, **dadurch gekennzeichnet, dass** es außerdem eine Sicherungsvorrichtung (DS) nach einem der vorhergehenden Ansprüche umfasst.

7. Fahrzeug nach Anspruch 6, **dadurch gekennzeichnet, dass** es vom Typ Automobil ist.

## Claims

1. Safety device (DS) for a first vehicle (V1) comprising analysis means (MAj) suitable for analysing its environment, in which control means (MC) are arranged, when said first vehicle (V1) is stationary with its ignition open and in the presence of a risk of collision of said first vehicle (V1) by a second vehicle (V2) travelling on the same lane (VC1) behind it in order to determine whether there exists in said analyzed environment at least one empty zone (ZVk) accessible by said first vehicle (V1), and, if so, in order to determine for the latter (V1) a trajectory in this empty zone (ZVk) suitable at least for limiting the consequences of this collision then to trigger a movement of said first vehicle (V1) along this determined trajectory while taking into account the presence of a third vehicle (V3) travelling on another lane (VC3), in the environment of the first vehicle, **characterized in that** said control means (MC) are arranged in the event of the absence of an empty zone (ZVk) in front of said first vehicle (V1) but of the determination of an empty zone (ZVk) on a rear lateral part of said first vehicle (V1), to determine for the latter (V1) a curvilinear trajectory towards the rear in this determined empty zone (ZVk), so that said second vehicle collides obliquely with a lateral side of said first vehicle (V1).

2. Device according to the preceding claim, **characterized in that** said control means (MC) are arranged, in case of determination of two empty areas (ZVk) to the right and left of a rear part of said first vehicle (V1), to determine for the latter (V1) a curvilinear trajectory to the rear in the determined empty area (ZVk) which is located on a lateral side adjacent to a driver of said first vehicle (V1).

3. Device according to one of the preceding claims, **characterized in that** said control means (MC) are arranged, in case of detection of said risk of collision, to trigger a passenger(s) alert of said first vehicle (V1).

4. Device according to one of the preceding claims, **characterized in that** said control means (MC) are arranged, in case of detection of said risk of collision, to trigger an operation of signal lights and/or a horn of said first vehicle (V1), so as to inform said environment of the movement of the latter (V1).

5. The device according to claim 4, **characterized in that** said signal lights are selected from a group comprising brake lights and hazard lights.

6. Vehicle comprising analysis means (MAj) suitable for analyzing its environment, **characterized in that** it further comprises a safety device (DS) according to one of the preceding claims.

7. Vehicle according to claim 6, **characterized in that** it is of the automobile type.
